# DEMANDE DE BREVET EUROPEEN

(11) **EP 3 342 710 A1**
(43) Date de publication de la demande: **04.07.2018**
(21) Numéro de dépôt: 17206791.0
(22) Date de dépôt: 12.12.2017
(51) Int. Cl.: B64D 15/12, F02C 7/045, F02C 7/047, B64D 33/02

(54) **STRUCTURE POUR ENSEMBLE PROPULSIF D'AERONEF, SYSTEME ET ENSEMBLE PROPULSIF ASSOCIES**

(30) Priorité: 27.12.2016 FR 1663427
(71) Demandeur: Airbus Operations S.A.S., 31060 Toulouse (FR)
(72) Inventeur: MENAY, Hassan, 44300 Nantes (FR); RAVISE, Florian, 44000 Nantes (FR)
(74) Mandataire: Gicquel, Olivier Yves Gérard

(57) **Abrégé**

L'invention concerne une structure (16) en matériau composite pour ensemble propulsif d'aéronef, la structure (16) comportant au moins une zone thermique (24) propre à recevoir de l'énergie électrique, la structure (16) étant caractérisée en ce que chaque zone thermique (24) comporte au moins une pellicule résistive (26) comprenant un film interne (30) réalisé dans un matériau thermoplastique rendu conducteur par inclusion de nanotubes de carbone, de sorte que chaque pellicule résistive (26) est propre à dissiper, par effet Joule, au moins une partie l'énergie électrique reçue par la zone thermique (24), un pli intermédiaire (28) réalisé dans un tissu satin imprégné d'un matériau thermoplastique, et un film externe (32) réalisé dans un matériau thermoplastique.

## Description

### DOMAINE TECHNIQUE

La présente invention concerne une structure en matériau composite pour ensemble propulsif d'aéronef, la structure comportant au moins une zone thermique propre à recevoir de l'énergie électrique. L'invention concerne également un système comprenant une telle structure, un ensemble propulsif et un procédé de fabrication d'une telle structure.

L'invention s'applique au domaine des ensembles propulsifs d'aéronefs, et plus particulièrement à des structures agencées dans de tels ensembles propulsifs, par exemple des panneaux acoustiques.

### ÉTAT DE LA TECHNIQUE ANTÉRIEURE

Il est connu de munir un ensemble propulsif, au niveau de son entrée d'air, d'une lèvre destinée à prévenir la formation de glace. En effet, une telle formation de glace est susceptible de modifier les caractéristiques aérodynamiques de l'ensemble propulsif et de dégrader ses performances.

Il est également connu de munir un ensemble propulsif d'un panneau acoustique. Un tel panneau est une structure composite destinée à réduire le bruit généré par une turbomachine présente dans l'ensemble propulsif lors de son fonctionnement.

Néanmoins, de tels ensembles propulsifs ne donnent pas entière satisfaction. En effet, dans de tels ensembles propulsifs, il est généralement peu aisé d'étendre le panneau acoustique en direction de l'entrée d'air en vue d'offrir une plus grande atténuation du bruit généré par la turbomachine. En effet, l'espace disponible pour le panneau acoustique est limité, en aval du panneau acoustique dans le sens d'écoulement du flux d'air généré par la turbomachine, par une première rangée de pales du turboréacteur, et en amont du panneau acoustique par la lèvre. Il est donc peu aisé de réduire le niveau du bruit généré par une telle turbomachine.

Un but de l'invention est donc de proposer un ensemble propulsif dans lequel l'atténuation acoustique est améliorée.

### EXPOSÉ DE L'INVENTION

A cet effet, l'invention a pour objet une structure du type précité, dans laquelle que chaque zone thermique comporte au moins une pellicule résistive comprenant un film interne réalisé dans un matériau thermoplastique rendu conducteur par inclusion de nanotubes de carbone, de sorte que chaque pellicule résistive est propre à dissiper, par effet Joule, au moins une partie l'énergie électrique reçue par la zone thermique, un pli intermédiaire réalisé dans un tissu satin imprégné d'un matériau thermoplastique, et un film externe réalisé dans un matériau thermoplastique.

En effet, dans le cas où une telle structure est un panneau acoustique, le panneau acoustique est propre à produire de la chaleur, destinée à empêcher la formation de givre. Par conséquent, grâce à une telle structure, l'extension du panneau acoustique en amont est possible.

Par conséquent, un tel panneau acoustique est propre à assurer une plus grande atténuation du bruit généré par la turbomachine, tout en prévenant la formation de givre dans l'ensemble propulsif.

Suivant un autre aspect avantageux de l'invention, la structure est un panneau acoustique.

En outre, l'invention a pour objet un système pour ensemble propulsif comprenant une structure telle que définie ci-dessus, et un circuit d'alimentation configuré pour acheminer de l'énergie électrique depuis une source d'énergie électrique jusqu'à chaque zone thermique de la structure.

Suivant d'autres aspects avantageux de l'invention, le système comporte une ou plusieurs des caractéristiques suivantes, prise(s) isolément ou suivant toutes les combinaisons techniquement possibles :
- le circuit d'alimentation comprend des organes d'ancrage destinés à assurer la fixation de la structure, les organes d'ancrage comportant au moins une surface conductrice d'électricité en contact électrique avec chaque zone thermique pour acheminer de l'énergie électrique jusqu'à chaque zone thermique ;
- chaque surface des organes d'ancrage est soudée à chaque zone thermique par au moins une soudure conductrice d'électricité.

En outre, l'invention a pour objet un ensemble propulsif comportant un système tel que défini ci-dessus.

Suivant un autre aspect avantageux de l'invention, chaque zone thermique de la structure délimite au moins partiellement un canal d'écoulement de fluide.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
- la figure 1 est une vue en section d'un ensemble propulsif selon l'invention, dans un plan longitudinal de l'ensemble propulsif;
- la figure 2 est un détail de la vue de la figure 1 ; et
- la figure 3 est une vue de face d'une surface intérieure d'une structure selon l'invention.

### EXPOSÉ DÉTAILLÉ DE MODES DE RÉALISATION PARTICULIERS

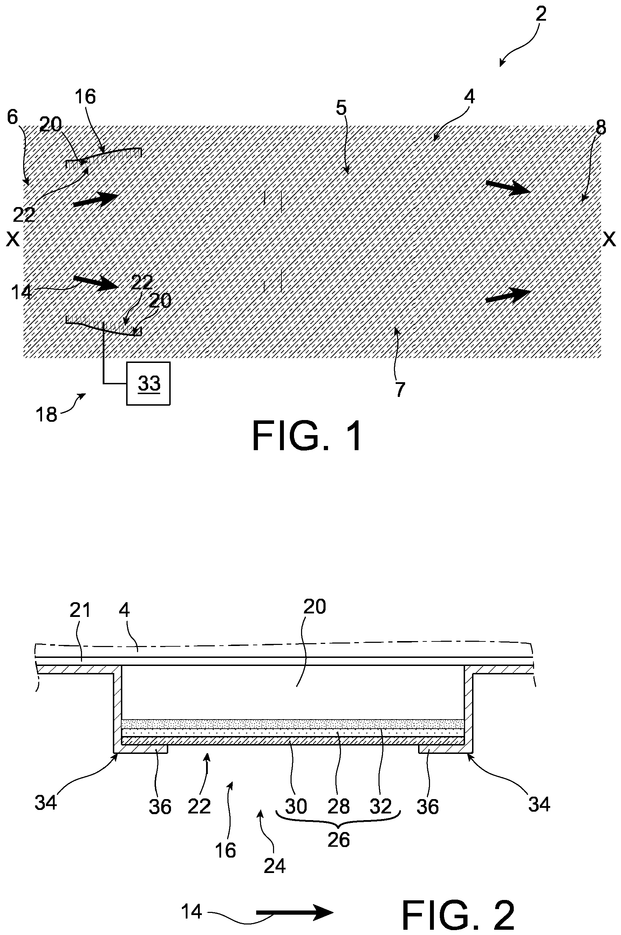

Un ensemble propulsif 2 selon l'invention est représenté sur la figure 1.

L'ensemble propulsif 2 comporte une nacelle 4 et une turbomachine, par exemple un turboréacteur 5.

La nacelle 4 entoure le turboréacteur 5 et délimite extérieurement un canal d'écoulement de fluide comprenant un canal d'entrée d'air 6, une veine secondaire 7 et un canal d'échappement 8.

Le turboréacteur 5 est destiné à générer, lors de son fonctionnement, une veine d'air 14 s'écoulant depuis le canal d'entrée 6 vers le canal d'échappement 8. La veine d'air 14 est illustrée par un ensemble de flèches sur la figure 1.

L'ensemble propulsif 2 comprend, en outre, au moins une structure 16 en matériau composite et un circuit d'alimentation 18 en énergie électrique de la structure 16.

Par « matériau composite », il est entendu, au sens de la présente invention, une résine dans laquelle sont emprisonnées des fibres. Un tel matériau est, par exemple, connu sous l'appellation anglaise « *Fibre Reinforced Plastic* ». Les fibres sont réalisées en carbone, en verre ou encore en aramide. La résine est une résine thermodurcissable (du type résine époxyde) ou encore une résine thermoplastique (par exemple le polyétheréthercétone ou PEEK, un polyétherimide ou PEI, ou encore le polyéthercétonecétone ou PEKK).

La structure 16 est configurée pour recevoir de l'énergie électrique, et pour dissiper au moins une partie de l'énergie électrique reçue sous forme d'énergie thermique.

Le circuit d'alimentation 18 est configuré pour fournir de l'énergie électrique à la structure 16.

La structure 16 est intégrée à la nacelle 4, par exemple pour délimiter au moins une section axiale du canal d'entrée d'air 6.

Par exemple, la structure 16 est un panneau acoustique. Dans ce cas, la structure 16 présente avantageusement une forme annulaire, ou est constituée par un ensemble de panneaux en portion d'anneau montés bout à bout circonférentiellement.

La structure 16 comporte un coeur 20, une surface extérieure 21 et une surface intérieure 22.

Le coeur 20 est disposé entre la surface extérieure 21 et la surface intérieure 22, au contact de la surface extérieure 21 et de la surface intérieure 22.

Par exemple, dans le cas où la structure 16 est un panneau acoustique, le coeur 20 présente une structure en nid d'abeille de type connu.

La surface extérieure 21 est, par exemple, celle, parmi la surface extérieure 21 et la surface intérieure 22, qui est disposée d'un côté radialement extérieur de l'ensemble propulsif 2.

Par exemple, la surface intérieure 22 est celle, parmi la surface extérieure 21 et la surface intérieure 22, qui est disposée d'un côté radialement intérieur de l'ensemble propulsif 2, comme illustré par la figure 1. Ainsi, la surface intérieure 22 est destinée à entrer en contact avec la veine d'air 14.

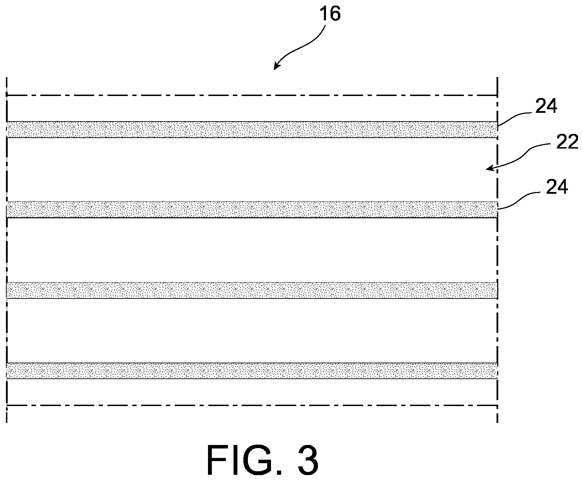

En référence aux figures 2 et 3, la surface intérieure 22 comporte au moins une zone thermique 24.

La zone thermique 24 est propre à recevoir l'énergie électrique fournie par le circuit d'alimentation 18. La zone thermique 24 est également propre à dissiper, sous forme d'énergie thermique, au moins une partie de l'énergie électrique reçue en provenance du circuit d'alimentation 18.

Avantageusement, la zone thermique 24 est propre à dissiper au moins une partie de l'énergie électrique reçue sous forme d'énergie thermique par effet Joule. Dans ce cas, et comme représenté sur la figure 3, la zone thermique 24 comporte une pellicule résistive 26 propre à dissiper, par effet Joule, au moins une partie de l'énergie électrique reçue en provenance du circuit d'alimentation 18 sous forme d'énergie thermique.

La pellicule résistive 26 est, par exemple, obtenue par colaminage d'un pli intermédiaire 28 entre un film interne 30, disposé du côté de la veine d'air 14, et un film externe 32, disposé du côté opposé à la veine d'air 14, comme cela apparaît sur la figure 2.

A titre d'exemple, chaque pellicule résistive 26 se présente, par exemple, sous forme de bandes.

Par exemple, le pli intermédiaire 28 est réalisé dans un tissu satin imprégné d'un matériau thermoplastique, pour apporter un support mécanique au film interne 30. Le pli intermédiaire 28 permet en outre de protéger la pellicule résistive 26 de l'érosion.

Par exemple, le film externe 32 est réalisé dans un matériau thermoplastique et permet d'assurer l'adhérence de la pellicule résistive 26 au coeur 20.

Par exemple, le film interne 30 est réalisé dans un matériau thermoplastique rendu conducteur par inclusion de nanotubes de carbone.

Par exemple, le matériau thermoplastique est du polyétherimide.

Bien évidemment, un matériau thermodurcissable, par exemple à base de résine époxyde, peut être utilisé.

Le circuit d'alimentation 18 est configuré pour acheminer de l'énergie électrique jusqu'à la structure 16 depuis une source 33 d'énergie électrique.

Avantageusement, le circuit d'alimentation 18 comprend des organes d'ancrage 34 de la structure 16, destinés à maintenir la structure 16 en place. Dans ce cas, les organes d'ancrage 34 comprennent au moins une surface 36 conçue pour être en contact avec la zone thermique 24. Chaque surface 36 est réalisée dans un matériau conducteur d'électricité pour permettre la circulation d'énergie électrique entre le circuit d'alimentation 18 et la zone thermique 24.

De préférence, les surfaces 36 sont soudées à la zone thermique 24 au moyen d'au moins une soudure (non représentée) conductrice d'électricité.

Une telle structure 16 est propre à dissiper de la chaleur pour empêcher la formation de givre. En outre, la présence de nanotubes de carbone dans la face interne 22 de la structure 16 est susceptible d'améliorer la résistance à l'érosion de la structure 16.

Ainsi, avec une telle solution de dégivrage, un agrandissement du panneau acoustique vers l'amont de l'entrée d'air est possible, ce qui permet d'optimiser la réduction du bruit.

## Revendications

1. Structure (16) en matériau composite pour ensemble propulsif (2) d'aéronef, la structure (16) comportant au moins une zone thermique (24) propre à recevoir de l'énergie électrique,
la structure (16) étant **caractérisée en ce que** chaque zone thermique (24) comporte au moins une pellicule résistive (26) comprenant un film interne (30) réalisé dans un matériau thermoplastique rendu conducteur par inclusion de nanotubes de carbone, de sorte que chaque pellicule résistive (26) est propre à dissiper, par effet Joule, au moins une partie l'énergie électrique reçue par la zone thermique (24), un pli intermédiaire (28) réalisé dans un tissu satin imprégné d'un matériau thermoplastique, et un film externe (32) réalisé dans un matériau thermoplastique.

2. Structure (16) selon la revendication 1, la structure (16) étant un panneau acoustique.

3. Système pour ensemble propulsif (2) comprenant une structure (16) selon la revendication 1 ou 2, et un circuit d'alimentation (18) configuré pour acheminer de l'énergie électrique depuis une source (33) d'énergie électrique jusqu'à chaque zone thermique (24) de la structure (16).

4. Système selon la revendication 3, dans lequel le circuit d'alimentation (18) comprend des organes d'ancrage (34) destinés à assurer la fixation de la structure (16), les organes d'ancrage (34) comportant au moins une surface (36) conductrice d'électricité en contact électrique avec chaque zone thermique (24) pour acheminer de l'énergie électrique jusqu'à chaque zone thermique (24).

5. Système selon la revendication 4, dans lequel chaque surface (36) des organes d'ancrage (34) est soudée à chaque zone thermique (24) par au moins une soudure conductrice d'électricité.

6. Ensemble propulsif (2) comportant un système selon l'une quelconque des revendications 3 à 5.

7. Ensemble propulsif (2) selon la revendication 6, dans lequel chaque zone thermique (24) de la structure (16) délimite au moins partiellement un canal d'écoulement de fluide.
